# EUROPEAN PATENT SPECIFICATION

(11) **EP 1 249 967 B1**
(45) Date of publication and mention of the grant of the patent: **25.10.2006**
(21) Application number: 02252620.6
(22) Date of filing: 12.04.2002
(51) Int. Cl.: H04L 12/24, H04Q 3/00, H04L 12/26

(54) **Mobile interactive logs**
Mobile interaktive Logbücher
Journaux d' événements mobiles et interactives

(30) Priority: 12.04.2001 GB 0109241
(43) Date of publication of application: 16.10.2002
(73) Proprietor: Mitel Networks Corporation, Ottawa, Ontario K2K 2W7 (CA)
(72) Inventor: Kasvand, Tonis, Nepean, Ontario K2E 6Z7 (CA); Virk, Audil, Kingston, Ontario K7M 5A6 (CA); Fram, David, Sydenham, Ontario K0H 2T0 (CA); Hughes, James, Kingston, Ontario K7L 4L2 (CA); Moller, Jon, Kingston, Ontario K7M 6V4 (CA); Stewart, Kristan, Kingston, Ontario K7M 5A3 (CA); Taylor, Ryan, Kingston, Ontario K7M 8K9 (CA)
(74) Representative: Walaski, Jan Filip

(56) References cited:
- EP-A- 0 915 627
- WO-A-00/47003
- HOSOON KU ET AL: "An intelligent mobile agent framework for distributed network management" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, 3 November 1997 (1997-11-03), pages 160-164, XP010254586 ISBN: 0-7803-4198-8
- GAVALAS D ET AL: "A hybrid centralised-distributed network management architecture" COMPUTERS AND COMMUNICATIONS, 1999. PROCEEDINGS. IEEE INTERNATIONAL SYMPOSIUM ON RED SEA, EGYPT 6-8 JULY 1999, LOS ALAMITOS, CA, USA,IEEE COMPUT. SOC, US, 6 July 1999 (1999-07-06), pages 434-441, XP010555067 ISBN: 0-7695-0250-4
- GRAY R ET AL: "Mobile agents: the next generation in distributed computing" PARALLEL ALGORITHMS/ARCHITECTURE SYNTHESIS, 1997. PROCEEDINGS., SECOND AIZU INTERNATIONAL SYMPOSIUM AIZU-WAKAMATSU, JAPAN 17-21 MARCH 1997, LOS ALAMITOS, CA, USA,IEEE COMPUT. SOC, US, 17 March 1997 (1997-03-17), pages 8-24, XP010218809 ISBN: 0-8186-7870-4

## Description

### Field of Invention

This invention relates to network administration and in particular to a network administration system for managing logs generated by network devices.

### Background of the Invention

Logs are generated through out computer and communication networks for a number of purposes. Currently, network administrators maintain the logs manually; this is a time intensive proposition. It is difficult to manually collect or log information, or maintain log settings from each device on ad-hoc or 'sporatic' networks (peer to peer cell phones, Personal Digital Assistants (PDAs), and the like), where network devices continuously enter and leave the network. There are too many transient devices for administration by manual means. It is therefore desirable to provide a means to manage such administrative matters.

If many logs are being generated then large amounts of resources may also be consumed with log storage and log data transport over the network. Further, network management can be difficult as a result of the amount of log traffic being received by log analysis tools. The log analysis tools may not use all of the data contained in the logs. However, such data still consumes network bandwidth and processing time. It is therefore desirable to provide a means to manage logs in a more efficient manner.

Further, end users of the network devices have little or no control over the generated logs, and often have little or no knowledge of log data being transmitted and stored. There are a number of privacy laws in force or being enacted that limit how such log data can be used without the consent of the end users. For network administrators, the privacy laws could become a major administrative burden. It is therefore desirable to provide end users with a means to control the log data being stored to protect their privacy.

Mobile agents for collecting and locally processing network management information from network devices have been proposed previously. Global Telecommunications Conference 1997 (Globecom '97), pages 160-164, "An Intelligent Mobile Agent Framework for Distributed Network Management", Ku H., Luderer W.R. and Subbiah B., 1997, I.E.E.E. and in 4^{th} International Symposium on Computers and Communications 1999 (ISCC '99), pages 434-441, "A Hybrid Centralised-Distributed Network Management Architecture", Gavalas D., Greenwood D., Ghanbari M. and O'Mahony M., 1999, I.E.E.E. Computer Society Press disclose the use of Java-based mobile agents in order to reduce network traffic. Meanwhile, EP 0 915 627 A2 discloses the use of mobile agents in a distributed system for a number of purposes, including selecting events to be logged and scheduling the generation of logs.

### Summary of the Invention

According to an aspect of the invention, there is provided a network administration system of a network for managing logs of MILog compliant network devices, comprising MILogs for traversing over the network to the network devices, each of the MILogs comprising instructions to manage the logs, the instructions being for execution on the network devices; and a MILog agent at each of the network devices for executing the instructions of the MILog, wherein at least one of said MILogs comprises instructions for managing other MILogs at the MILog agent.

Thus, the invention permits the provision of a system in which all logs are received and sent through a MILog agent at each network device. The MILog agents route and filter logs accordingly to instructions received via Mobile Interactive Logs (MILogs) and may further provide other services such as creating MILogs. A user may be able to create and dispatch a MILogat any time to any MILog-compliant component from a MILog agent authorized to create MILogs.

According to another aspect of the invention, there is provided a method of managing logs of MILog compliant network devices of a network, comprising creating MILogs for traversing over the network to the network devices, each of the MILogs comprising instructions to manage the logs, the instructions being for execution on the network devices; and executing the instructions of the MILogs by MILog agents, where a MILog agent is present at each of the network devices, wherein at least one of said MILogs comprises instructions for managing other MILogs at the MILog agent.
According to another aspect of the invention, there is provided a network device which generates and manages logs, comprising a network interface for connecting to a network of other network devices; a memory for storing a MILog agent; and a processor for executing the MILog agent; where the MILog agent receives MILogs through the network interface from other network devices, each of the MILogs comprising instructions for managing the logs; and the MILog agent executing the instructions carried by the MILogs wherein at least one of said MILogs comprises instructions for managing other MILogs at the MILog agent.

### Brief Description of the Drawings

The present invention will be described in detail with reference to the accompanying drawings, in which like numerals denote like parts, and in which
Figure 1 is a block diagram of an exemplary network incorporating the present invention;
Figure 2 is an interface diagram of the network of Figure 1 and further shows Mobile Interactive Log interactions, according to the present invention;
Figure 3 shows three exemplary types of MILogs of Figure 1, according to the present invention; and
Figure 4 is a block diagram showing internal activities of a MILog Agent of Figure 1, according to the present invention.

### Detailed Description of the Preferred Embodiment

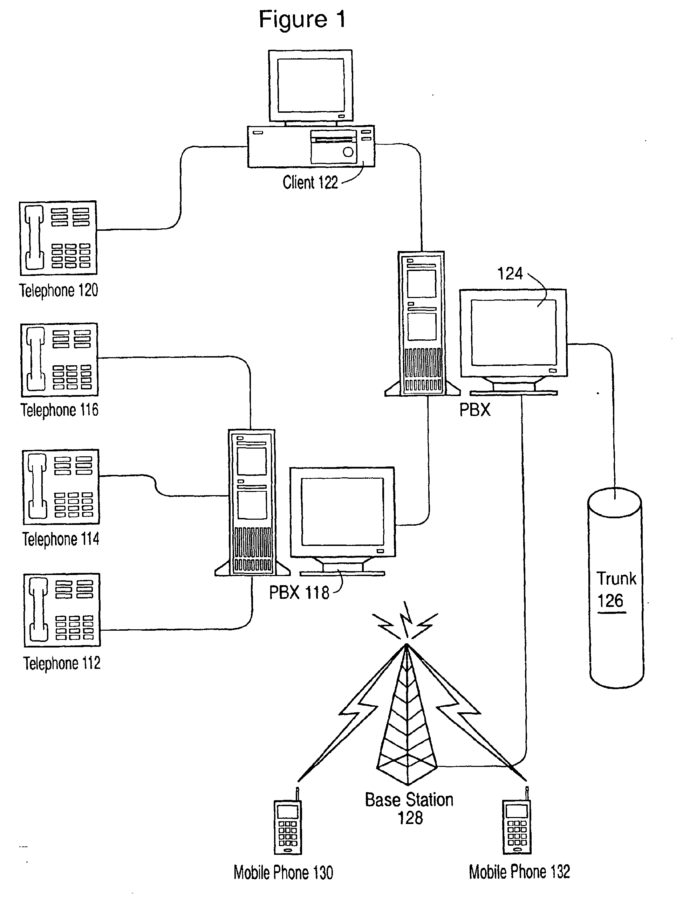

Figure 1 shows an exemplary ad-hoc or sporatic network of network devices comprising a plurality of phones (112 to 116) connected to a server implemented PBX 118, a further phone 120 connected to a client server 122, both the client 122 and PBX 118 being connected to a PBX 124. The PBX 124 is connected to a T1 trunk 126 and to a wireless base station 128 in a well-known manner. The wireless base station 128 is in communication with cell phones (130 to 132). The cell phones (130 to 132) could also be PDA's or any other wireless device. Each of the network devices shown in Figure 1, with the exception of the T1 trunk 126, has the capability of generating logs. All logs are received and sent through a MILog agent at each network device. The MILog agents route and filter logs according to instructions received via Mobile Interactive Logs (MILogs), and further provide other services such as creating MILogs. A user is able to create and dispatch a MILog at any time to any MILog-compliant component from a MILog agent authorized to create MILogs.

MILogs are logs, which also have functional capabilities instead of just carrying information. A MILog carries instruction code for execution by MILog agents on MILog compliant network devices that produce logging information. Agent technology is used to implement MILogs and MILog agents, and for MILogs to traverse heterogeneous ad-hoc networks. A MILog traverses a network from device to device on an itinerary. At each device, a MILog agent interacts with the MILog to execute the instruction code carried by the MILog. The instructions are to perform a number of functions including filtering log transmissions, deleting logs stored on network devices according to certain characteristics, cloning of the MILog, and managing other MILogs.

MILog agents are programs that have a number of functions including dispatching, creating, cloning, deleting and handling itinerary of MILogs. MILog agents also provide a run time execution environment for execution of the instruction code carried within MILogs. The functions of MILog agents further include bringing together instruction code and itinerary to create a MILog; controlling the mobility of MILogs including serialization and re-instantiation for traveling MILogs; checking the itinerary of MILogs and dispatching the MILogs to their next location if necessary; cloning a MILog for dispatching to the next location if so indicated in the MILog's instructions; and performing validation checks on MILogs for authentication.

A network device (hard-wired or wireless) is MILog compliant if the device hosts at least one MILog agent, passes all logs to the MILog agents for transmission, and receives logs via the MILog agents. For the purpose of MILog compliance, MILog agents do not have to be capable of creating MILogs. A MILog agent only has to be capable of accepting and otherwise supporting MILogs. The authorization to create and dispatch MILogs has to be carefully controlled, as certain MILogs can be destructive (i.e. deleting logs) if improperly handled.

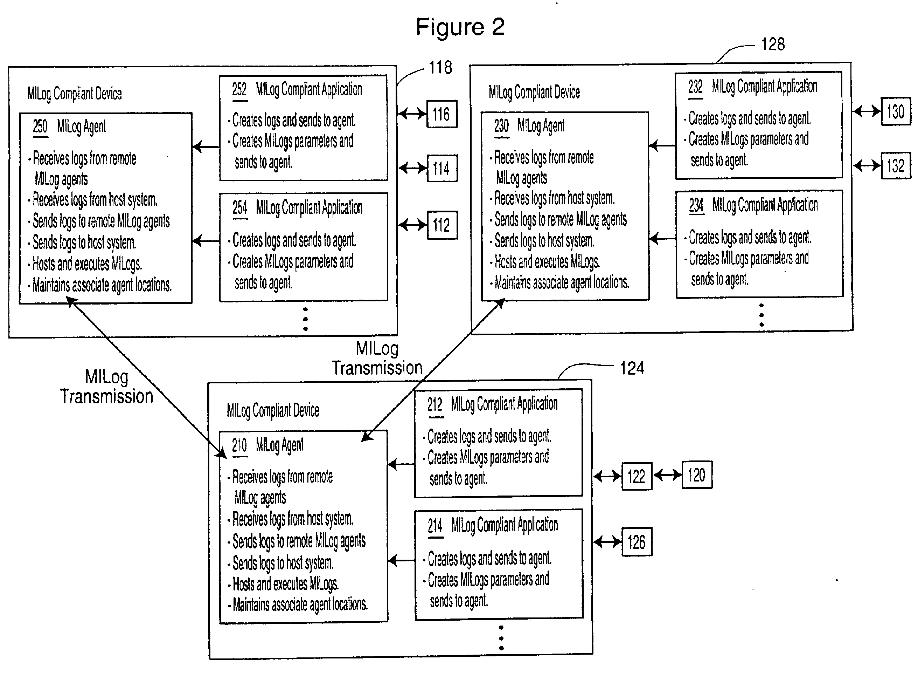

Each of the network devices shown in Figure 1, with the exception of the T1 trunk 126, is MILog compliant. Figure 2 is an interface diagram of the network of Figure 1 and further showing an example of MILog agents and MILog Compliant Applications on of PBX 118, Base Station 128, and PBX 124. Each of the network devices (118, 128 and 124) comprises a MILog Agent (210, 230, 250) and a number of MIL Compliant Applications (212, 214, 232, 234, 252, 254). Each of the network devices (118, 128 and 124) can, however, host any number of applications including none (not shown). MILog agents and MILog Compliant Applications are similarly present on the other network devices (112 to 116, 120, 122, 126, 130, 132) (not shown).

The MILog Agent 210 hosts and executes MILogs, receives logs from its host system (i.e. PBX 124), sends logs to its host system (for example, to storage and log analysis tools), receives and sends logs and MILogs to and from, remove MILog agents, and maintains associate agent locations. The other MILog Agents including 230, 250 operate in a similar manner as MILog Agent 210. MILog Agents (210, 230, 250) on their respective devices interact with each other as well as receive logs from devices that send logs to the Agents (210, 230, 250) such as, for example, devices 116 or 132.

In this embodiment, for security purposes, MILogs are only created by authorized MILog agents, which are shown on Figure 2 as 210, 230, and 250. MILog Compliant Applications (212, 214, 232, 234, 252, 254) create and send logs to the MILog agents for handling as require for MILog compliance. Applications (212, 214, 232, 234, 252, 254) send instructions to their respective MILog Agent (210, 230, 250) to create the MILogs.

The MILog Agents (210, 230, 250) do not have to know the existence of all the devices in the network and this feature is particularly advantageous for ad hoc or 'sporatic' networks. For example, Agent 230 does not know Agent 250 exists. However, through neighbour association, the Agents (210, 230, 250) are able to communicate with any other agent connected to the network. For example, Agent 230 sends instructions for Agent 250 in a MILog to Agent 210, and Agent 210 passes the MILog to Agent 250. There can also be more than one agent on one device and these local agents can similarly interact with each other.

The architecture of a MILog includes the following fields: DESTINATION, an IP address and port of where to send the MiLog; AGENT SIGNATURE, the MILog's unique signature; TIME-OUT, the length of time the MILog is to be active on a host MILog agent; SEARCH & DESTROY RULE (S & D), a rule set used to search and destroy specific log(s); FILTERING LOGS RULE, a rule set used to filter specific log(s); RETURN HOME RULE, a rule set used to signal when this MILog is to return home (originating MILog agent); CLONE RULE, a rule set used to initiate a clone of this MILog; ITINERARY LIST, a list of network addresses that this MILog and its clones are to visit; NUMBER OF LOGS DELETED, the number of logs deleted by this MILog; and NUMBER OF LOGS FILTERED, the number of logs filtered by this MILog. Further, information, if any, is appended to the end of MILogs as required for transport by the MILogs. Using this architecture, it is possible to create a number of different MILogs with different attributes.

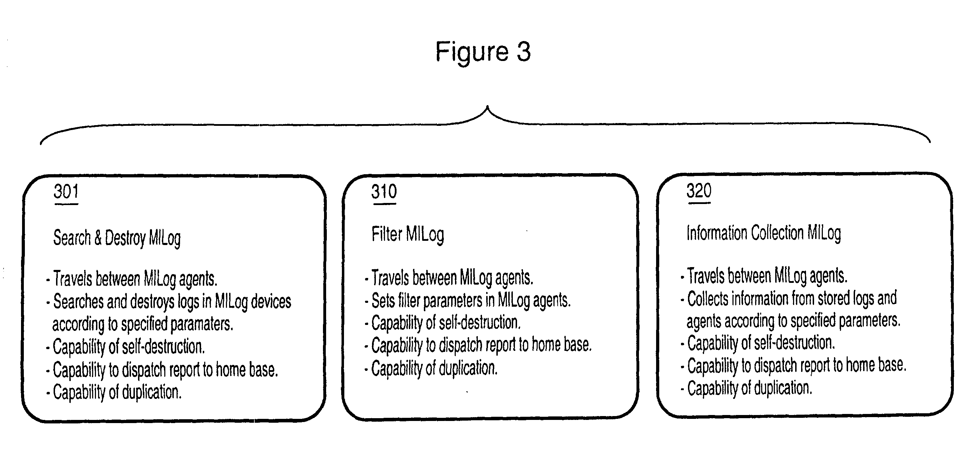

Figure 3 shows three exemplary types of MILogs that are more useful for managing logs in a heterogeneous ad-hoc network. The three exemplary types of MILogs are: Search & Destroy MILog 300, Filter MILog 310, and Information Collection MILog 320. Each of these MILogs is capable of carrying instructions for self-destruction, return to home (originating MILog agent), and duplication. The Search & Destroy MILog 310 travels between MILog agents searching and destroying logs in MILog compliant devices according to specified parameters. The Filer MILog 310 travels between MILog agents setting filter parameters in MILog agents. The Information Collection MILog 320 travels between MILog agents collecting information from stored logs and MILog agents according to specified parameters.

With the increase in the numbers of devices being networked, especially personal connectivity devices, privacy or anonymity is a major concern for end users. End users of, for example, cell phone 130 are provided with a capability send (or request) Search & Destroy MILogs to delete all personal information of the end users stored in logs of the network. This may become a very important security feature of any personal device interacting with a public or consumer based network.

A MILog agent comprises a MILog list, a Filter Rule Set, a Search & Destroy Rule Set, a Clone Rule Set, and a Return Home Rule Set. The MILog list is a list of all MILogs acting upon the MILog agent. The MILogs on this list are monitored and updated as MILogs expire and as the number of logs deleted/filtered changes. For example, if as a result of a particular MiLog, a log is filtered, then the MILog list is updated to increment that MiLog's NUMBER OF LOGS FILTERED by one.

The Filter Rule Set is a Rule Set consisting of all of the Filter Rules from every MILog in the MILog list. Each Rule is associated to its MILog in the MILog list. Each time a Filter Rule is satisfied, the NUMBER OF LOGS FILTERED field in the associated MILog is incremented.

The Search and Destroy (S & D) Rule Set is a Rule Set consisting of all of the Search and Destroy Rules from every MILog in the MILog list. Each Rule is associated to its MILog in the MILog list. Each time an S & D Rule is satisfied, the NUMBER OF LOGS DESTROYED field in the associated MILog is incremented.

The Clone Rule Set is a Rule Set consisting of all of the Clone Rules from every MILog in the MILog list. Each Rule is associated to its MILog in the MILog list. Each time a Clone Rule is satisfied, the appropriate IP/Port is extracted from the ITINERARY LIST and a clone of the associated MILog is created and sent to the address specified by the IP/Port. If there are no more IP/Ports, then no clone is created.

The Return Home Rule Set is a Rule Set consisting of all of the Return Home Rules from every MILog in the MILog list. Each Rule is associated to its MILog in the MILog list. Each time a Return Home Rule is satisfied the associated MILog is removed from the MILog list and sent home to the originating MILog agent.

Each time a MILog enters a MILog agent, it is checked to see whether the MILog is one that is returning home, or if it is a MILog sent by another MILog agent. If the MILog is returning home, its results are to be analyzed. If the MILog did not originate from the MILog agent, then the MILog is incorporated into the MILog agent's MILog list and the MILog's respective instructions are incorporated into the Agent's Filter Rule Set, S & D Rule Set, Clone Rule Set and Return Home Rule Set as appropriate.

Exemplary pseudo-code processing of MILogs of Figure 3 by the MILog agent is as follows:

When a MILog is received, the MILog agent checks the MiLog's AGENT SIGNATURE to see if the MILog agent originated the MiLog.

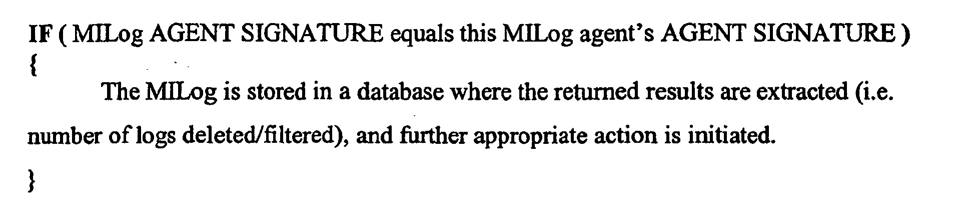

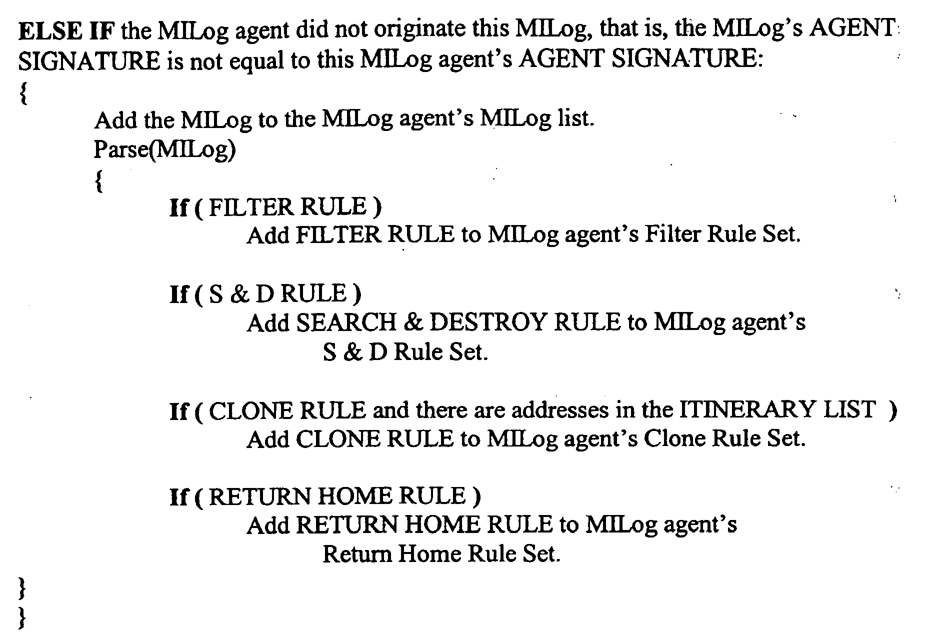

Every time a Filter rule or S & D rule is satisfied, then within the MILog list, the associated MILog's NUMBER OF LOGS FILTERED/DESTROYED is updated. If a clone rule is satisfied, a clone is generated and sent. If a return home rule is satisfied, the associated MILog is removed from the MILog list, and sent to its originating source. Every time the TIME_OUT value expires, the MILog is removed from the MILog list, including all of its Rules from the above Rule Sets, and then destroyed.

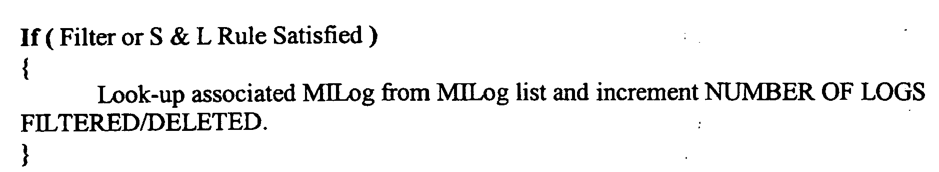

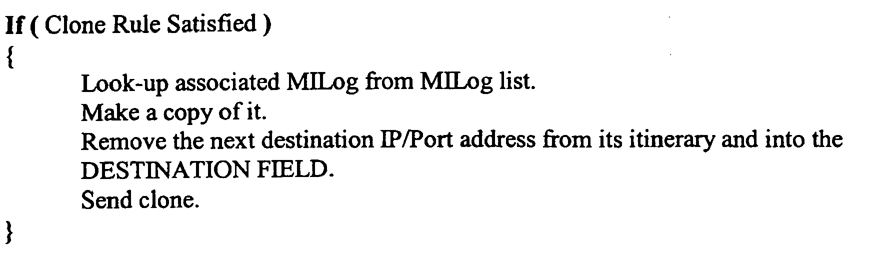

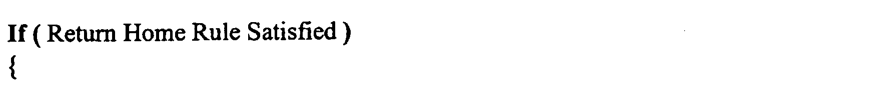

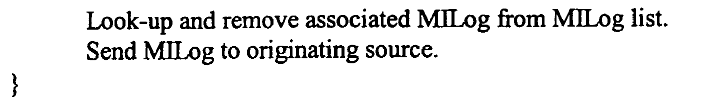

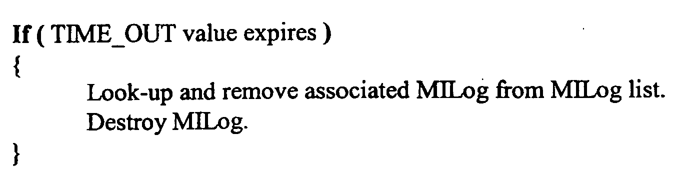

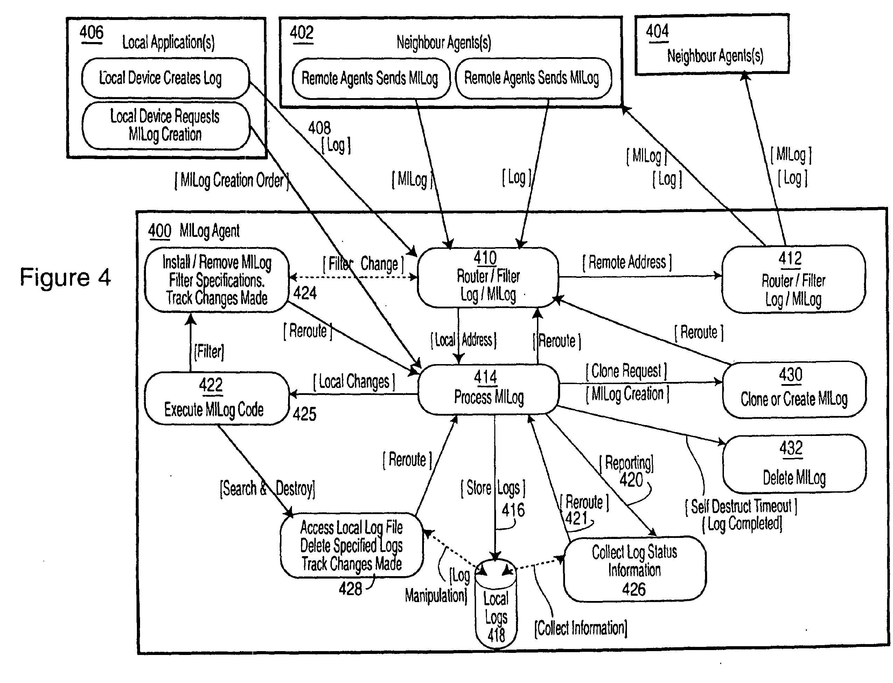

Figure 4 is a block diagram showing internal activities of a MILog Agent 400 and its interactions with Neighbour Agents 402, 404 and Local Application(s) 406 over a network. Route/Filter 410 is the routing and filtering mechanism of the MILog Agent 400. All logs and MILogs pass through the Route/Filter 410 for routing and filtering before entering or leaving the MILog Agent 400. The Route/Filter 410 has a Filter Rule Set. The Route/Filter 410 evaluates every log/MILog that is received to determine if the log/MILog is to be accepted by the MILog Agent 400 or is to be dispatched further on to Neighbour Agents 402, 404.

When logs and MILogs (logs/MILogs) arrive at the Route/Filter 410, each log/MILog is checked to determine if the log/MILog is to be used in the MILog Agent 400, dispatched to specific neighbours 402, or just passed onto a neighbour agent 404 for further transport. If the log/MILog is for the MILog Agent 400, the log/MILog is processed at the Process MILog Request 414. If the log/MILog is a log, the log is stored [store logs] 416 in the local logs database 418.

The Process MILog Request 414 analyzes the MILog's instruction code. If the instruction relates to collecting information from the MILog Agent 400 or from local logs [reporting] 420, the information is collected and attached 426 to the MILog. The updated MILog is then rerouted 421 back to Process MILog Request 414 for further processing according to the instruction code. The MILog is then rerouted to 410 and dispatched 412 accordingly.

If the instruction code relates to filtering logs, then the MILog instruction is executed in Execute MILog Code 422 [Local Changes]. The filtering rules are installed, removed, and changed 424, which changes the Filter Rule Sets of the Route/Filter 410 accordingly. All changes are tracked. Other MILog agents using MILogs are thus able to install filters for logs from MILog Agent 400 and in due course also remove their filters as desired. The MILog is then updated and rerouted to Process MILog Request 414 for further processing according to the instruction code, if required.

If the instruction code relates to searching and destroying logs, the MILog instruction is executed by Execute MILog Code 422 [Local Changes]. The logs in the local logs database 418 are accordingly manipulated by 428 [Log Manipulation]. All changes are tracked. The MILog is then updated and rerouted to Process MILog Request 414 for further processing according to the instruction code, if required.

If the instruction code relates to cloning the MILog, then a clone request [Clone Request] is made and the MILog is cloned 430 according to specified instructions. The clone(s) are then dispatched [Reroute] accordingly.

If the Process MILog Request 414 determines that the MILog has finished its instructions and no other action is necessary, then the MILog is deleted.

The Process MILog Request 414 further reviews and updates MILogs on its MILog list, and where a self-destruct instruction timeout of a MILog has timed-out or where a MILog has completed its instructions, the MILog is deleted [Self Destruct Timeout] / [Log Completed] and its instructions affecting the MILog Agent 400 reversed, if required.

The Local Application(s) 406 is able to request creation of a MILog 410 [MILog Creation Order]. When a MILog Creation Order is send by a local application then a MILog is created 430 according to the parameters specified by the local application.

The Local Application(s) 406 send their logs [Log] 408 to the Route/Filter 410 for handling. The logs are stored, filtered, and routed according to the rule set of the Route/Filter 410.

The above disclosure generally describes an embodiment of the present invention. A more complete understanding can be obtained by reference to the following specific Examples. These Examples are described solely for purposes of illustration and are not intended to limit the scope of the invention. Changes in form and substitution of equivalents are contemplated as circumstances may suggest or render expedient. Although specific terms have been employed herein, such terms are intended in a descriptive sense and not for purposes of limitation.

For an exemplary case of a cellular phone and a communications tower which are both MILog-compliant. The cellular phone emits a log every time it 'pings' the communications tower. The communications tower in this scenario is running MILog-compliant log tracking software and is analyzing and storing all incoming logs from all communications devices within its range. If the cellular phone is 'pinging' the communications tower repeatedly, an administrator in charge of the tower may wish to filter out ping logs from the cellular phone. To execute, the administrator interfaces with a local application to dispatch a MILog to thereby filter out the undesired ping logs from the cellular phone.

To automate this process, a log analysis tool is configured so that a MILog is created and dispatched based on a set of logs. For example, when the logs indicate that the tower has received 10 'ping' logs from any single device then a 'Filter" MILog is dispatched and the MILog is set to self-destruct after a given time. This ensures that the cellular phone does not have the MILog filter resident indefinitely. If another pattern of 10 'pings' is received after the original MILog had self destructed (or returned home to report back on the number of 'pings' that it filtered), then a second MILog is sent out to repeat the process.

On the other side of this example, a user of the cellular phone may not wish for a trail of logs containing personal information to be left behind for analysis by another party (the tower in this case). If the cellular phone is authorized to create MILogs, then the user enters in a code on the cellular phone keypad that dispatches a 'Search and Destroy' MILog. This MILog is transmitted through the log stream to the tower. A MILog agent at the tower executes the instructions of the MILog and searches through the log storage files and removes any logs relating to the originating device (the cellular phone).

Exemplary rule sets for logs are disclosed in U.K. Patent Application No. 0008952.4 filed April 12, 2000, entitled "DYNAMIC RULE SETS FOR GENERATED LOGS".

It will be understood by those skilled in the art that MILogs could be created to have many combination of many functional possibilities beyond the Filter MILog, Search and Destroy MILog, and Information Collection MILog.

## Claims

1. A network administration system of a network for managing logs (418) of MILog compliant network devices (112-124, 128-132), comprising
MILogs (300, 310, 320) for traversing over the network to the network devices, each of the MILogs comprising instructions to manage the logs, the instructions being for execution on the network devices; and
a MILog agent (210, 230, 250, 400) at each of the network devices for executing the instructions of the MILog;
**characterized in that**:
at least one of said MILogs comprises instructions for managing other MILogs at MILog agents.

2. A network administration system according to claim 1, wherein each of the MILogs (300, 310, 320) traverses over the network on an itinerary.

3. A network administration system according to claim 1 or 2, wherein one or more than one of the MILog agents (210, 230, 250, 400) are able to create MILogs (300, 310, 320).

4. A network administration system according to claim 1, 2 or 3, wherein the logs (418) are generated according to rule sets.

5. A network administration system according to any of claims 1 to 4, wherein the network is an ad-hoc network.

6. A method of managing logs (418) of MILog compliant network devices (112-124, 128-132) of a network, comprising
creating MILogs (300, 310, 320) for traversing over the network to the network devices, each of the MILogs comprising instructions to manage the logs (418), the instructions being for execution on the network devices; and
executing the instructions of the MILogs by MILog agents (210, 230, 250, 400) where a MILog agent is present at each of the network devices;
**characterized in that**:
at least one of said MILogs comprises instructions for managing other MILogs at MILog agents.

7. A method according to claim 6, wherein each of the MILogs (300, 310, 320) traverses over the network on an itinerary.

8. A method according to claim 6 or 7, wherein one or more than one of the MILog agents (210, 230, 250, 400) are able to create MILogs (300, 310, 320).

9. A method according to claim 6, 7, or 8, wherein the logs (418) are generated according to rule sets.

10. A method according to any of claims 6 to 9, wherein the network is an ad-hoc network.

11. A network device (112-124, 128-132) which generates and manages logs (418), comprising
a network interface for connecting to a network of other network devices;
a memory for storing a MILog agent (210, 230, 250, 400); and
a processor for executing the MILog agent;
where the MILog agent receives MILogs(300, 310, 320) through the network interface from other network devices, each of the MILogs comprising instructions for managing the logs; and the MILog agent executing the instructions carried by the MILogs;
**characterized in that**:
at least one of the MILogs comprises instructions for managing other MILogs at the MILog agent.

12. A network device (112-124, 128-132) according to claim 11, wherein each of the MILogs(300, 310, 320) traverses over the network on an itinerary.

13. A network device (112-124, 128-132) according to claim 11 or 12, wherein the MILog agent (210, 230, 250, 400) is able to create MILogs (300, 310, 320), where the MILogs created by the MILog agent are sent to MILog agents of the other network devices over the network for execution by the MILog agents to manage logs at the other network devices.

14. A network device (112-124, 128-132) according to claim 11, 12 or 13, wherein the logs (418) are generated according to rule sets.

15. A network device (112-124, 128-132) according to any of claims 11 to 14, wherein the network is an ad-hoc network.

## Patentansprüche

1. Netzmanagementsystem eines Netzes für das Management von Protokollen (418) von MILog-konformen Netzvorrichtungen (112-124, 128-132), das umfasst:
MILog-Protokolle (300, 310, 320), die das Netz zu den Netzvorrichtungen durchlaufen sollen, wobei jedes der MILog-Protokolle Befehle enthält, um die Protokolle zu managen, wobei die Befehle dazu vorgesehen sind, in den Netzvorrichtungen ausgeführt zu werden; und
einen MILog-Agenten (210, 230, 250, 400) in jeder der Netzvorrichtungen zum Ausführen der Befehle des MILog-Protokolls;
**dadurch gekennzeichnet, dass**:
wenigstens eines der MILog-Protokolle Befehle für das Management anderer MILog-Protokolle bei den MILog-Agenten enthält.

2. Netzmanagementsystem nach Anspruch 1, bei dem jedes der MILog-Protokolle (300, 310, 320) das Netz auf einer bestimmten Route durchläuft.

3. Netzmanagementsystem nach Anspruch 1 oder 2, bei dem ein oder mehr als einer der MILog-Agenten (210, 230, 250, 400) MILog-Protokolle (300, 310, 320) erzeugen können.

4. Netzmanagementsystem nach Anspruch 1, 2 oder 3, bei der die Protokolle (418) in Übereinstimmung mit Regelsätzen erzeugt werden.

5. Netzmanagementsystem nach einem der Ansprüche 1 bis 4, bei dem das Netz ein Ad-Hoc-Netz ist.

6. Verfahren für das Management von Protokollen (418) von MILog-konformen Netzvorrichtungen (112-124, 128-132) eines Netzes, das umfasst:
Erzeugen von MILog-Protokollen (300, 310, 320), die das Netz zu den Netzvorrichtungen durchlaufen sollen, wobei jedes der MILog-Protokolle Befehle für das Management der Protokolle (418) umfasst, wobei die Befehle bei den Netzvorrichtungen ausgeführt werden sollen; und
Ausführen der Befehle der MILog-Protokolle durch MILog-Agenten (210, 230, 250, 400), wobei in jeder der Netzvorrichtungen ein MILog-Agent vorhanden ist;
**dadurch gekennzeichnet, dass**:
wenigstens eines der MILog-Protokolle Befehle für das Management anderer MILog-Protokolle bei MILog-Agenten umfasst.

7. Verfahren nach Anspruch 6, bei dem jedes der MILog-Protokolle (300, 310, 320) das Netz auf einer bestimmten Route durchläuft.

8. Verfahren nach Anspruch 6 oder 7, bei dem einer oder mehr als einer der MILog-Agenten (210, 230, 250, 400) MILog-Protokolle (300, 310, 320) erzeugen können.

9. Verfahren nach Anspruch 6, 7 oder 8, bei der die Protokolle (418) in Übereinstimmung mit Regelsätzen erzeugt werden.

10. Verfahren nach einem der Ansprüche 6 bis 9, bei dem das Netz ein Ad-Hoc-Netz ist.

11. Netzvorrichtung (112-124, 128-132), die Protokolle (418) erzeugt und managt und umfasst:
eine Netzschnittstelle zum Verbinden anderer Netzvorrichtungen mit dem Netz;
einen Speicher zum Speichern eines MILog-Agenten (210, 230, 250, 400); und
einen Prozessor zum Ausführen des MILog-Agenten;
wobei der MILog-Agent MILog-Protokolle (300, 310, 320) über die Netzschnittstelle von anderen Netzvorrichtungen empfängt, wobei jedes der MILog-Protokolle Befehle für das Management der Protokolle enthält; und der MILog-Agent die von den MILog-Protokollen transportierten Befehle ausführt;
**dadurch gekennzeichnet, dass**:
wenigstens eines der MILog-Protokolle Befehle für das Management anderer MILog-Protokolle bei den MILog-Agenten enthält.

12. Netzvorrichtung (112-124, 128-132) nach Anspruch 11, bei der jedes der MlLog-Protokolle (300, 310, 320) das Netz auf einer bestimmten Route durchläuft.

13. Netzvorrichtung (112-124, 128-132) nach Anspruch 11 oder 12, bei der der MILog-Agent (210, 230, 250, 400) MILog-Protokolle (300, 310, 320) erzeugen kann, wobei die durch den MILog-Agenten erzeugten MILog-Protokolle über das Netz zu MILog-Agenten der anderen Netzvorrichtungen gesendet werden, um durch die MILog-Agenten ausgeführt zu werden, um Protokolle bei den anderen Netzvorrichtungen zu managen.

14. Netzvorrichtung (112-124, 128-132) nach Anspruch 11, 12 oder 13, bei der die Protokolle (418) in Übereinstimmung mit Regelsätzen erzeugt werden.

15. Netzvorrichtung (112-124, 128-132) nach einem der Ansprüche 11 bis 14, bei der das Netz ein Ad-Hoc-Netz ist.

## Revendications

1. Système d'administration de réseau, destiné à la gestion de journaux (418) de dispositifs de réseau conformes à la norme MILog (pour « *Mobile Interactive Log* »
- Journal interactif mobile) (112 à 124, 128 à 132), comprenant :
des journaux MILog (300, 310, 320) destinés à parcourir le réseau vers les dispositifs de réseau, chacun des journaux MILog comprenant des instructions pour la gestion des journaux, ces instructions étant destinées à être exécutées sur les dispositifs de réseau ; et
un agent MILog (210, 230, 250, 400), au niveau de chaque dispositif de réseau, destiné à exécuter les instructions du journal MILog ;
**caractérisé en ce que** :
au moins un desdits journaux MILog comprend des instructions pour la gestion d'autres journaux MILog au niveau des agents MILog.

2. Système d'administration de réseau selon la revendication 1, dans lequel chacun des journaux MILog (300, 310, 320) parcourt le réseau sur un itinéraire.

3. Système d'administration de réseau selon la revendication 1 ou 2, dans lequel un ou plusieurs des agents MILog (210, 230, 250, 400) sont capables de créer des journaux MILog (300, 310, 320).

4. Système d'administration de réseau selon la revendication 1, 2 ou 3, dans lequel les journaux (418) sont créés selon des ensembles de règles.

5. Système d'administration de réseau selon l'une quelconque des revendication 1 à 4, dans lequel le réseau est un réseau ad hoc.

6. Procédé de gestion de réseaux (418) de dispositifs de réseau conformes à la norme MILog (112 à 124, 128 à 132) sur un réseau, comprenant les étapes consistant à :
créer des journaux MILog (300, 310, 320) afin de parcourir le réseau vers les dispositifs de réseau, chacun des journaux MILog comprenant des instructions pour la gestion des journaux (418), ces instructions étant destinées à être exécutées sur les dispositifs de réseau ; et
exécuter les instructions des journaux MILog par des agents MILog (210, 230, 250, 400), un agent MILog étant présent au niveau de chaque dispositif de réseau ;
**caractérisé en ce que** :
au moins un desdits journaux MILog comprend des instructions pour la gestion d'autres journaux MILog au niveau des agents MILog.

7. Procédé selon la revendication 6, dans lequel chacun des journaux MILog (300, 310, 320) parcourt le réseau sur un itinéraire.

8. Procédé selon la revendication 6 ou 7, dans lequel un ou plusieurs des agents MILog (210, 230, 250, 400) sont capables de créer des journaux MILog (300, 310, 320).

9. Procédé selon la revendication 6, 7 ou 8, dans lequel les journaux (418) sont créés selon des ensembles de règles.

10. Procédé selon l'une quelconque des revendication 6 à 9, dans lequel le réseau est un réseau ad hoc.

11. Dispositif de réseau (112 à 124, 128 à 132) qui produit et gère des journaux (418), comprenant :
une interface de réseau, destinée à se connecter à un réseau fait d'autres dispositifs de réseau ;
une mémoire, destinée à stocker un agent MILog (210, 230, 250, 400) ; et
un processeur destiné à exécuter l'agent MILog ;
dans lequel l'agent MILog reçoit des journaux MILog (300, 310, 320) d'autres dispositifs de réseau, via l'interface de réseau, chacun des journaux MILog comprenant des instructions pour la gestion des journaux ; et l'agent MILog exécutant les instructions transportées par les journaux MILog ;
**caractérisé en ce que** :
au moins un desdits journaux MILog comprend des instructions pour la gestion d'autres journaux MILog au niveau de l'agent MILog.

12. Dispositif de réseau (112 à 124, 128 à 132) selon la revendication 11, dans lequel chacun des journaux MILog (300, 310, 320) parcourt le réseau sur un itinéraire.

13. Dispositif de réseau (112 à 124, 128 à 132) selon la revendication 11 ou 12, dans lequel l'agent MILog (210, 230, 250, 400) est capable de créer des journaux MILog (300, 310, 320), les journaux MILog créés par l'agent MILog étant envoyés aux agents MILog des autres dispositifs de réseau, sur le réseau, pour être exécutés par les agents MILog afin de gérer des journaux au niveau des autres dispositifs de réseau.

14. Dispositif de réseau (112 à 124, 128 à 132) selon la revendication 11, 12 ou 13, dans lequel les journaux (418) sont créés selon des ensembles de règles.

15. Dispositif de réseau (112 à 124, 128 à 132) selon l'une quelconque des revendications 11 à 14, dans lequel le réseau est un réseau ad hoc.
